# EUROPEAN PATENT SPECIFICATION

(11) **EP 3 314 743 B1**
(45) Date of publication and mention of the grant of the patent: **08.04.2020**
(21) Application number: 16733372.3
(22) Date of filing: 21.06.2016
(51) Int. Cl.: H02P 27/06, F04D 27/00, H02H 7/08

(54) **METHOD OF CONTROLLING A COMPRESSOR SYSTEM DURING VOLTAGE DIPS**
VERFAHREN ZUM STEUERN EINES KOMPRESSORS WÄHREND SPANNUNGSEINBRÜCHEN
PROCÉDÉ DE COMMANDE D'UN SYSTÈME DE COMPRESSEUR PENDANT LES CHUTES DE TENSION

(30) Priority: 23.06.2015 EP 15173301
(43) Date of publication of application: 02.05.2018
(73) Proprietor: ABB Schweiz AG, 5400 Baden (CH)
(72) Inventor: CORTINOVIS, Andrea, 8953 Dietikon (CH); MERCANGOEZ, Mehmet, 4332 Stein (CH); PIEDER, Joerg, 7013 Domat/Ems (CH); VAN DE MOORTEL, Sture, 4600 Olten (CH); BESSELMANN, Thomas, 5413 Birmenstorf (CH)
(74) Representative: Kransell & Wennborg KB
(86) International application number: PCT/EP2016/064318
(87) International publication number: WO 2016/207165

(56) References cited:
- EP-A1- 2 042 743
- WO-A1-02/38963
- WO-A2-2015/028242

## Description

### FIELD OF THE INVENTION

The invention relates to a compressor system and a method for controlling the compressor system.

### BACKGROUND OF THE INVENTION

Gas compressors are widely used in industrial applications such as gas extraction, gas processing and transportation. These rotating machines have different constraints on their operating ranges such as minimum speed, maximum speed, choke limit and surge limit.

Usually, the most challenging limitation is the surge limit, which represents the constraint to an unstable operating mode of a compressor system that occurs when the pressure ratio of the compression drops below a network resistance. Surge corresponds to fluctuation of flow and pressure up to the point of flow reversal with possible adverse effects such as overheating or mechanical damage of the machines but also of the surrounding piping system.

In recent years, the gas compressors driven by gas turbines have more and more been replaced by gas compressors driven by an electrical motor. For example, in some geographic areas, government regulations were released prohibiting the installation of new gas turbines to drive compressor stations for environmental reasons.

An electrical motor with an electrical converter and a controller that is adapted to control the converter in such a way that the electrical motor may run a variable speed may be called electrical variable-speed drive. For gas compressors driven by electrical variable-speed drives, grid disturbances may be a serious problem. Typically, these grid disturbances constitute voltage dips, also known as brown-outs, power loss or voltage sag. For example, voltage dips may occur due to iced power lines touching each other in winter. In contrast to gas turbines, a trip of a variable-speed drive may cause a loss of drive torque within some tens of milliseconds. This loss of drive torque results most of the time in surge conditions for the gas compressor.

Usually, cascaded control systems are utilized, where the torque of the variable-speed drive is regulated in an inner control loop, and the dynamics of the gas compressor in an outer control loop. While electric quantities change in the range of a few milliseconds, the dynamics of the gas compressor are significantly slower, such that usually a sufficient time separation is provided.

There exist a number of approaches to tackle grid voltage dips in the context of electrical variable-speed drive.

Firstly, the controller may preventively trip the variable-speed drive: For example, when the grid voltage magnitude falls under a certain threshold (such as 80% of a nominal grid voltage), a trip is activated stopping the operation of the variable-speed drive. Such a threshold may be combined with a time condition, i.e. the grid voltage magnitude has to fall below the threshold for a certain time span. Tripping the drive is not strictly necessary, but a measure of precaution to avoid difficult operating conditions including inrush currents at the end of the voltage dip.

Also, the controller may provide a full-torque ride-through operation mode. In this case, the normal operation of the variable-speed drive is continued, when a voltage dip occurs. Since a reduced voltage needs to be compensated for by an increased input current for maintaining the same drive torque, this procedure may be only viable for sufficiently high grid voltages. A further possibility is that the controller provides zero-torque ride-through operation mode. When the grid voltage magnitude falls under a specific threshold, the variable-speed drive is stopped from generating drive torque. After the grid voltage has returned, i.e. the voltage dip is over, the operating the drive torque may be slowly ramped up again.

The anti-surge control system on the other hand is usually only informed about the existence of a voltage dip, and may employ a static timer based ride-though logic, which enables a ride-through, if the duration of the voltage disturbance is short. The main drawback of a static timer may be that it may be designed for worst-case conditions, which arise from operating conditions of the compressor, acceptable duration and length of the voltage dip and various other impact factors.

EP 2 042 743 A1 discloses a method of controlling a compressor system with a gas compressor and an electrical variable-speed drive supplied by an electrical grid and driving the gas compressor.

WO 02/38963 A1 shows an active surge protection of rotational compressors and WO 2015/028242 A2 provides a model predictive control for an electrical system.

### DESCRIPTION OF THE INVENTION

An objective of the invention is to lower and/or to minimize the down times of an electrical driven gas compression system during the occurrence of grid disturbances.

This objective is achieved by the subject-matter of the independent claims. Further exemplary embodiments are evident from the dependent claims and the following description.

An aspect of the invention relates to a method of controlling a compressor system. The method may be performed by a controller of the compressor system, which, for example, comprises a processor, in which software is executed that is adapted to perform the method. It also may be possible that the method is implemented at least partially in hardware, such as an FPGA or DSP.

The compressor system comprises a gas compressor and an electrical drive (which mays be a variable-speed drive) supplied by an electrical grid and driving the gas compressor.

The gas compressor need not only be the rotating machine compressing the gas but also may further comprise pipes and interconnections, junctions, valves (such as input and/or output valves), blow-off paths, tanks, scrubbers, etc. For example, the gas compressor may be used for compressing natural gas (e.g. to produce liquid gas), air, CO₂, nitrogen, etc.

The electrical drive may comprise an electrical motor and an electrical converter supplied by the electrical grid and switched by a drive controller. The controller may be adapted to drive the electrical motor with different speeds and/or the electrical drive may be a variable-speed drive.

According to the invention, the method comprises: detecting a voltage dip in a grid voltage supplied to the electrical drive (for example by measuring the grid voltage and comparing the grid voltage with a voltage dip threshold) and in the case, a voltage dip is detected, performing the following steps: assuming a future development of the grid voltage based on the grid voltage; predicting a future development of at least one process quantity based on at least one process parameter measured in the compressor system and the assumption of the future development of the grid voltage; and providing the predicted future development of the at least one process quantity to a protection system.

For example, the method may use the predictions about a future development of the system to take a decision between a ride-through during the voltage dip and a shut-down because of the voltage dip.

For example, a voltage dip may be detected, when one or more of the phases of the grid voltage and/or a grid voltage magnitude falls below 80% of a nominal grid voltage value. In this case, a special controller logic may be started that predicts a future development of at least one process quantity (such as a speed of the motor) based on the voltage dip and may supply further controllers/control systems with this information.

In particular, when the voltage dip is detected, a future development of the grid voltage is assumed, therefrom a future development of the torque of the electrical motor may be predicted and therefrom a future development of the at least one process quantity is predicted.

It has to be understood that the future development of the above mentioned quantities (grid voltage, torque, process quantity) may be a trajectory over time, for example on support points predicted with a discrete time stepping prediction method. Furthermore, the future development of the grid voltage, the torque and/or the process quantity may be predicted for a predefined time window. This time window may be a moving time window that is updated every time step, the ride-through logic is performed again during the voltage dip.

According to an embodiment of the invention, the method further comprises: deciding on shutting down the compressor system, when the future development of the at least one of the process quantity reaches a shut-down threshold. The protection system may monitor, whether the process quantity will reach a shut-down threshold (i.e. falls below or rises above a threshold value). When the shut-down threshold is reached, the compressor system may be shut-down. Otherwise it may be operated in a ride-through operation mode, in which, for example, only reduced torque is produced by the electrical drive.

It has to be noted that the decision of the shut-down and/or to ride-through may affect more than one electrical machine and/or gas compressor. The decision logic may also take further measures, for example initiation a coordinated ride-through of multiple electrical machines by shutting down some electrical machines while riding through the remaining ones. This may be especially important if the grid is weak and strong interactions are expected between drawn current and the respective voltage decrease.

According to the invention, the assumption of the future development of the grid voltage is based on a predefined depth and a predefined length of an average voltage dip. For example, the future development may be modelled by a substantially rectangular trajectory of the grid voltage (or at least one of its phases). For example, it may be assumed that the voltage during the voltage dip is the actual measured voltage or is a predefined voltage. It also may be assumed that the voltage will return to its nominal value after a predefined time (calculated from the actual time). Another more conservative assumption may be that the measured voltage level at a specific time instant is persisting for the whole prediction window.

According to the invention, the predefined depth and the predefined length of the average voltage dip are determined online from a set of historical voltage dip cases. It may be possible that data from previous (historical) voltage dips is collected and evaluated to alter the predefined depth and a predefined length used for modelling the future development of the grid voltage. Additionally or alternatively, the assumed future development of the grid voltage is based on an assumption of a persistence of the actual measured voltage. In other word it is assumed, that during the voltage dip, the voltage stays within a voltage band, i.e. does not substantially rise or fall during the time window. By determining the predefined depth and the predefined length of the average voltage dip from historical data ia more accurate prediction of the operating point of the compressor is possible, leading to a more accurate decision about if and when to shut down the compressor. In particular, this is true for the case of asymmetric voltage dips, where only one or two phases are affected and as a consequence the grid voltage magnitude is oscillating and deviates significantly from the assumption of being persistent.

According to an embodiment of the invention, the at least one process quantity comprises a mechanical process quantity. The process quantity may be understood as a quantity outside of the electrical system, i.e. not belonging to the electrical part of the compressor system but to the remaining part. The mechanical process quantity may relate to the mechanical system interconnecting the electrical motor with the gas compressor, such as a shaft.

According to an embodiment of the invention, the at least one process quantity comprises a thermodynamic process quantity. This quantity may relate to pressures and/or temperatures in the gas compressor. Also quantities being based on both mechanical and thermodynamic quantities are possible.

For example, the at least one process quantity may comprise a rotation speed of a shaft of the gas compressor. When this rotation speed falls under a specific shut-down threshold during the prediction time window, the decision for shut-down may be made. Also, the at least one process quantity may comprise at least one of: a compressor flow, a suction pressure, a discharge pressure, a pressure ratio, a distance to surge, a time to surge, etc. When one of these quantities falls under a specific shut-down threshold during the prediction time window, decision for shut-down may be made.

It also may be possible that the shut-down threshold is not a predefined value, but is dynamically adjusted, for example based on the grid voltage and/or the torque and/or the operating point of the compressor.

In general, the future development of the torque and the at least one process quantity may be predicted by an online simulation or may be determined from a lookup table that has been calculated offline (with an offline simulation). These simulations may be based on models of the electrical drive and the gas compressor.

According to an embodiment of the invention, the method further comprises: predicting a future development of a torque of the electrical drive supplied to the compressor based on the future development of the grid voltage (or further electrical quantities such as a DC link voltage, a transformer voltage, etc.), wherein the future development of the at least one process quantity is based on the future development of the torque of the electrical drive. It may be possible that two prediction models may be used (one for the torque, the other one for at least one process quantity), wherein the one model (for the at least one process quantity) depends on a quantity predicted by the other model (the torque).

Also, the simulation may be a combined simulation based on a combined prediction model of the electrical drive, of the gas compressor and optionally of the mechanical system interconnecting the drive with the compressor. In such a combined prediction model, the torque and the process quantity may be predicted simultaneously.

The one or more prediction models may also be based on one or more transfer functions which may be either identified during commissioning or fitted using historical data. As most simple prediction models, even static relationships can be envisioned, for example for an electrical model and/or a grid model.

According to an embodiment of the invention, the prediction of the future development of the torque and/or of the at least one process quantity is based on one or more offline calculated lookup table interrelating the future development of the grid voltage with the future development of the torque and/or interrelating the process parameter with the at least one process quantity. These lookup tables may be based on offline calculations. In this case, the specific prediction logic need not evaluate a prediction model by solving differential equations online but only may take the needed values from the lookup table indexed by actual states of the gas compressor system that, for example, may be determined directly or indirectly from measurements by simple equations.

According to an embodiment of the invention, the future development of the process quantity and/or the torque is based on a dynamical prediction model of the compressor system, the dynamical model modelling the physical behaviour of the compressor system. The electrical drive may be seen as an electrical system that may be modelled and/or simulated with thermodynamically equations for predicting a future development of the at least process quantity. Also the gas compressor may be seen as a mechanical and/or thermodynamically system that may be modelled and/or simulated with thermodynamically equations for predicting a future development of the at least one process quantity.

According to an embodiment of the invention, the dynamical prediction model is based on at least one of: a model of the gas compressor, a model of the electrical grid, a model of the electrical drive, and/or a model of a mechanical shaft interconnecting the electrical drive and the gas compressor. All these models may be based on differential equations in the discrete time domain, which may be solved online.

To take into account the voltage drop caused by the current drawn by the electrical drive, iterations may be used to check the feasibility of the torque required and/or its influence on the voltage drop. This may also be done by solving an optimization problem, which maximizes the power and/or current that can be extracted from the electrical grid without tripping the compressor system. This may be important, if the grid is weak.

Alternatively, this coupling may be modelled by online prediction of the grid impedance.

In the case, when the electrical drive is controlled by an MPC (model predictive control) controller, a maximum available torque (which may have been predicted by the ride-through controller) may be provided as an input to the MPC of the drive controller. In this case, an upper input constraint of the MPC on the torque may be changed on the maximum available torque.

It has to be understood that the electrical machine has to be controlled during the voltage dip that it stays in a controllable, defined state. For example, the detection of the voltage dip also may be signalled to a controller of the electrical drive, which then switches into a special ride-through mode during the voltage dip.

This mode may be a zero-torque ride-through mode and/or full-torque ride-through mode and/or partial-torque ride-through mode, for example as described above.

It also may be possible that the controller switches into a reduced-torque ride-through mode, in which only a reduced torque is generated by the electrical drive. This reduced torque may depend on the reduced voltage during the voltage dip. For example, the torque to be produced by the electrical drive may be based on the predicted future development of the grid voltage and/or on the predicted future development of the torque.

A further aspect of the invention relates to a compressor system. It has to be understood that features of the method as described in the above and in the following may be features of the compressor system as described in the above and in the following.

According to an embodiment of the invention, the compressor system comprises a gas compressor, an electrical drive driving the gas compressor, and a controller for deciding to shut-down the compressor system in the case of a voltage dip, wherein the controller is adapted to perform the method as described in the above and in the following. In other words, the controller may decide between a ride-through through the voltage dip (where the operation of the compressor system is maintained, for example in a special ride-through mode, see above) and a shut-down of the compressor system (in which, for example, the electrical drive is stopped and inlet and/or outlet valves, hot/cold recycle valves and/or station recycle valves of the gas compressor are actuated).

The controller logic may be implemented and executed on a fast drive controller, where all fast electrical signals are available for utilization together with the slower process signals from the gas compression process. Alternatively, the controller logic may be implemented on a dedicated controller which is communicating through fibre-optics with a controller of the electrical drive. This may satisfy the fast data requirement that may be needed to run the algorithm.

These and other aspects of the invention will be apparent from and elucidated with reference to the embodiments described hereinafter.

### BRIEF DESCRIPTION OF THE DRAWINGS

The subject-matter of the invention will be explained in more detail in the following text with reference to exemplary embodiments which are illustrated in the attached drawings.
Fig. 1A shows a diagram illustrating a voltage dip and a surge condition.
Fig. 1B shows a diagram with a compressor map illustrating stable and unstable regions of a compressor system due to surge.
Fig. 2 schematically shows a compressor system according to an embodiment of the invention.
Fig. 3 shows diagrams illustrating a method according to an embodiment of the invention.
Fig. 4 schematically shows a compressor system according to an embodiment of the invention.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

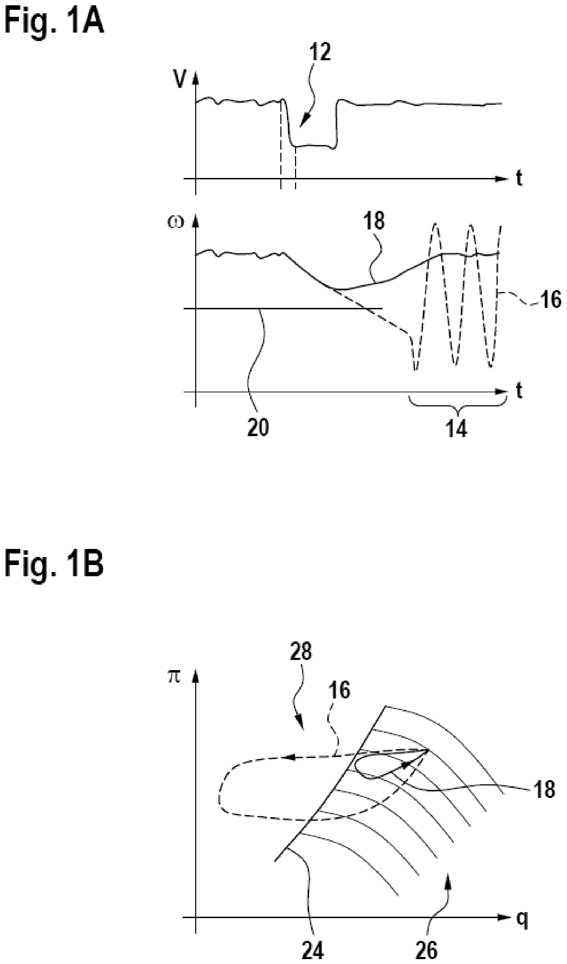

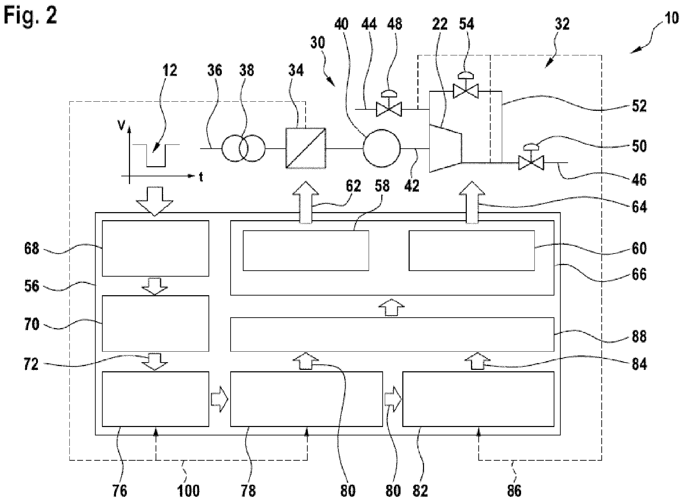

Fig. 1A shows a diagram with a grid voltage V and a shaft speed ω over time for a compressor system 10 as shown in Fig. 2. The grid voltage V has a voltage dip 12, which may cause the system 10 to enter a surge condition 14, as shown by the dashed line 16. The solid line 18 shows a situation with a smaller voltage dip 12, in which a safe ride-through is possible, since the surge condition 14 is not entered.

Fig. 1A also shows, that the surge condition 14 is entered, when the shaft speed ω drops below a threshold value 20.

Fig. 1B illustrates a compressor map showing the pressure ratio π (the ratio of the pressure at the inlet and the outlet of the gas compressor) with respect to the volumetric mass flow q through the gas compressor machine 22 (see Fig. 2). A surge line 24 divides the compressor map into a region 26, in which the system 10 is stable, and a region 28, in which the system 10 enters a surge condition 14.

The physical explanation for the loss of drive torque causing surge conditions is the following. The compression torque reduces the shaft speed ω in absence of drive torque, when the impeller of the compressor machine 22 is still in pressurized conditions. At some point, the impeller cannot maintain the pressure gradient across the machine 22 anymore and local backflow will occur causing the on-set to surge. This can also be observed in the compressor map, where the operating point moves to the left at almost constant pressure ratio. If the shaft speed ω continues to fall, the compression system 10 will be pushed into a surge condition 14 and a shut-down needs to be initiated.

Fig. 2 shows a compressor system 10 comprising an electrical drive 30 and a gas compressor 32. The electrical drive 30 comprises a converter 34, which is interconnected via a transformer 38 with an electrical grid 36. The converter 34 powers an electrical motor 40, which is coupled via a shaft 42 with the rotating compressor machine 22.

The gas compressor 32 has an inlet 44, through which gas, such as natural gas, may enter the gas compressor 32, and an outlet 46, through which the compressed gas may leave the gas compressor 32. Gas coming from the inlet 44 passes through the suction valve 48. The gas is then compressed in the compressor machine 22 and either discharged through the outlet valve 50 to the outlet 46 or recirculated through a recycle path 52. In case of recycling, the gas flows through the recycle path 52 and the recycle valve 54 back to the inlet of the compressor machine 22.

The system 10 furthermore has a controller 56 for controlling the electrical drive 30 and the gas compressor 32. Note that the logic of the controller 56 may run at a fast sampling rate, e.g. 1 ms, in order to be able to fully capture the up-to-date information necessary to take the correct decisions. Note that blocks of the controller 56 described in the following may perform their functionality every time interval of the sampling rate.

First of all, the controller 56 has a drive controller block 58 and a process controller block 60, which generate reference signals 62, 64 for the electrical drive and the gas compressor 32, respectively. For example, the drive controller block 58 may generate torque or speed reference signals 62 and/or the process controller may generate reference signals for the valves 48, 50, 54. This input generation block 66 also may control the gas compressor system 10, under normal operation conditions, i.e. when no voltage dip is present.

The drive controller block 58 also may be adapted for controlling the electrical drive 30 also under undervoltage conditions. Even in the case of a voltage dip 12, the drive controller block 58 may be adapted for manipulating reference signals for the converter 34 such as torque and/or speed such that a lower torque is generated. For example, under the condition that as much torque as possible is provided. The switching signals for the converter 34 are in the end generated from the reference signals.

For detecting voltage dips 12, the controller 56 has a disturbance detection block 68. The beginning of a voltage dip 12 may be detected by continuously monitoring the grid voltage V. This may be achieved for example by comparing the actual value with the mean and variance of a past data window. Alternatively, different electric signals inside the electric drive 30 may be monitored and used as input to the disturbance detection block 68. From these different electrical signals, an occurrence of a voltage dip 12 may be predicted.

When a voltage dip 12 is detected, this is signalled to a grid voltage prediction block 70 and optionally to the drive controller block 58, which then may initialize a zero-torque or reduced torque operation mode.

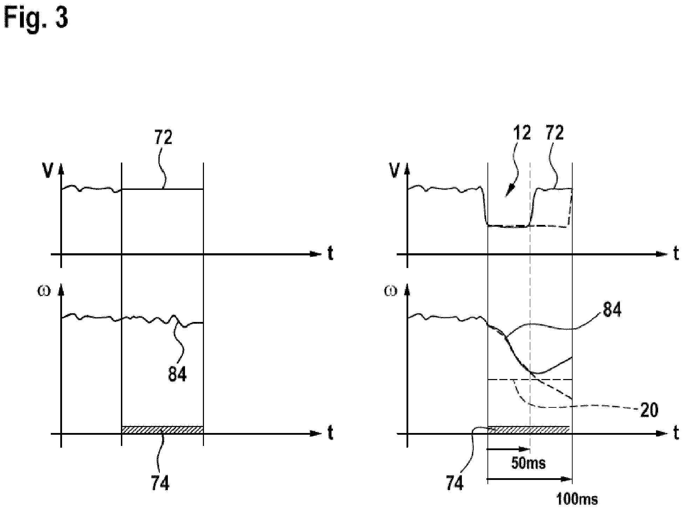

The grid voltage prediction block 70 assumes a future development 72 of the grid voltage V, as shown in Fig. 3. For example, this may be a trajectory of the grid voltage V for a predefined future prediction time window 74.

For example, while the voltage dip 12 is occurring, the block 70 may assume a specific duration and/or depth of the voltage dip 12 which is updated at each sampling time interval. The duration and/or depth be set by a user and/or may relay upon worst-case assumptions or upon analysing historical data. If historical data are used, it may be possible to assign probabilities to the depth and/or length of the voltage dips 12.

The future development 72 of the grid voltage V is supplied to a grid power prediction block 76. In the block 76, the available grid power is predicted by using the actual information from the grid 36 and/or from the electrical drive 30.

In drive torque prediction block 78, a future development 80 of the drive torque is predicted. For example, this may be achieved using a static relationship or by using an electrical model and simulating the future development 80 of the electrical drive 30 for the future time window 74. Also, the future development 80 of the drive torque may be based on a lookup table. For example, the future development 80 of the drive torque may be a trajectory or a trajectory profile for the future time window 74.

The future development 80 of the drive torque is then input to the process behaviour prediction block 82, which predicts a future development 84 of one or more process quantities, such as the shaft speed ω, a time to surge or a distance to surge, etc. The prediction is based on at least one process parameter 86, such as a pressure, temperature, flow, etc. measured in the gas compression process. The prediction may be performed either with a prediction model that is online solved or on a lookup table that has been calculated offline.

For example, the block 82 may simulate the future trajectories of the gas compressor system using a compressor model. This simulation may also include the compressor control systems such as an anti-surge controller and a process controller, for example as provided by block 60. The model equations may be simulated for example using a fixed step, variable step, explicit and/or implicit integration algorithms. The initial conditions for the simulation may be directly measured (e.g. by electrical and process signals) or predicted from the available measurements 86.

In decision block 88, a decision about ride-through or shut-down of the compressor system is made. The results 80, 84 of the simulation may serve as basis for the decision about ride-through or emergency shut-down. The future development 84 of the at least one process quantity q is compared with a threshold value 20, as shown in Fig. 3. When the future development 84 reaches the threshold value 20, the decision block 88 decides to shut-down.

Furthermore, the decision may be based on additional information, for example, on how safe the system can ride-through taking into consideration surge margins and other safety criteria.

The decision block 66 may be seen as a protection system that decides based on the future development 84, whether it is possible to continue with normal operation, to switch to zero-torque or low-torque drive-through or to shut down.

After the ride-through or shut-down decision is taken, the input generation block 66 manipulate reference signals 62, 64 of the electrical drive 30 and/or of the gas compression process 32, for example by manipulating hot/cold recycle valves and station recycle valve.

Fig. 3 illustrates the method in a further scenario. Assume a steady-state operation at constant grid voltage V and constant speed ω of motor 40 and compressor machine 22, as shown in the left diagram. The blocks 70 and 82 would not predict any substantial changes in the development 72, 84 of these quantities.

In the next time instant, a voltage dip 12 is detected as is shown in the right hand diagram. In this specific example, the time window 74 is 100 ms into the future and therefore the grid voltage trajectory 72 is generated for this time window. The solid line represents a most likely scenario of a voltage dip 12 of 50 ms, whereas another scenario is shown as dashed line corresponding to a 100 ms voltage dip 12. The grid voltage trajectory 72 is then translated into a torque trajectory 80 in block 78.

The resulting torque trajectory 80 is then used as an input to block 82, which return a trajectory 84 of a process quantity q within the prediction time window 74. In the present case, the results are represented by the shaft speed ω, but they could also be shown as compressor flow, distance to surge, time to surge, pressure ratio, etc.

In the first case of a 50 ms disturbance, it can be seen that the speed ω is predicted to be able to recover back to the initial operating point. This results in a decision to ride-through the system 10 avoiding surge conditions. On the other hand, in the case of a 100 ms voltage dip 12, the system 10 will go into surge and it will not be possible to stabilize the system 10 at the initial operating point. In the second case, a shut-down needs to be initialized. As an example, the decision between ride-through and shut-down can be realized using a threshold 20 of no-return on the speed ω, which may be computed online or offline as a function of the operating point. In general, the decision may depend on operating points, boundary conditions of the compression process, machine characteristics and/or piping characteristics.

As time progresses further, the moving time window 74 proceeds in time and different adjustments on the shape of the future development 72 of the grid voltage V may take place after additional information is available for the controller 56. For example, if the 50 ms case is assumed and after 60 ms the grid voltage V does not recover back, the controller 56 (and in particular block 70) may switch for example to the 100 ms assumption.

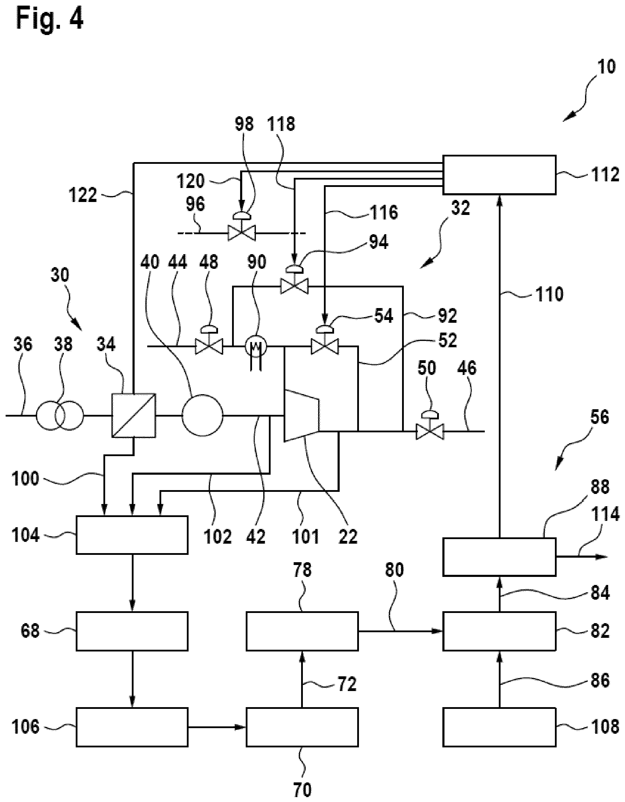

Fig. 4 shows a further embodiment of a compressor system 10, with a further embodiment of the controller 56. The gas compressor 32 furthermore has a cooler 90 after the valve 48 and a second cold recycle path 92 with a cold recycle valve 94. The recycle path 52 is a hot recycle path and the valve 64 is a hot recycle valve. In case of hot recycling, the gas flows through the recycle path 52 and the hot recycle valve 54 back to the inlet of the compressor machine 22. Similarly, the cold recycle path 92 and the cold recycle valve 94 are used in case of cold recycle.

A station recycle path 96, which connects the common discharge header of several gas compressors 32 to a common suction header, comprises a total station recycle valve 98.

A data acquisition block 104 of the controller 56 receives three different types of data: electrical data 100 from the drive 30, mechanical data 102 from a vibration system or torque meters and process data 101. A basic embodiment needs only electrical data 100 and process data 101.

This data is collected and transmitted to the grid disturbance detection block 68, which is then responsible for detecting any symmetric or asymmetric voltage dips 12.

This information is forwarded together with the voltage level and a past window to the triggering block 106. The triggering block 106 starts the logical operations sequence in case of a voltage dip 12, otherwise the algorithm is not executed.

In case a voltage dip is detected, block 70 is triggered, which assumes the voltage level and the duration of the voltage dip 12. As explained before, this can be based on historical data (e.g. mean duration and depth of voltage dips) or on a worst-case scenario (e.g. actual voltage value is hold constant for the entire window length). Based on these user specifications, the block 70 assumes the voltage trajectory 72 for a future time window 74.

This information is passed to the torque prediction block 78. This block uses an electrical model (e.g. of grid, drive and motor) to predict the resulting torque profile 80 in the considered future time window 74.

The torque profile 80 is received by the prediction block 82, which uses actual process model parameters 86 given by a process parameter prediction block 108.

The prediction block 82 simulates the process model given the torque profile 80 and numerically integrates the process model to get the future trajectories 84 of the process. These results 84 are given to the decision block 88, which uses rules based on the operating points, boundary conditions of the compression process, machine characteristics and piping characteristics to decide on ride-through or emergency shut-down. In case any manipulation is necessary, a command 110 is given to a central controller 112 and alarms and/or alerts 114 are communicated to higher automation levels. The commands 110 may comprise hot recycle valve references 116, cold recycle valve references 118, station recycle valve references 120 as well as drive references 122 or trajectories.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- V: grid voltage
- ω: shaft speed
- π: pressure ratio
- q: mass flow
- t: time
- 10: compressor system
- 12: voltage dip
- 14: surge condition
- 16: system development with surge
- 18: system development without surge
- 20: ride-through threshold
- 22: rotating compressor machine
- 24: surge line
- 26: region without surge
- 28: region with surge
- 30: electrical drive
- 32: gas compressor
- 34: converter
- 36: electrical grid
- 38: transformer
- 40: electrical motor
- 42: shaft
- 44: inlet
- 46: outlet
- 48: inlet valve
- 50: outlet valve
- 52: recycle path
- 54: recycle valve
- 56: controller
- 58: drive controller block
- 60: process controller block
- 62: reference signal
- 64: reference signal
- 66: input generation block
- 68: disturbance detection block
- 70: grid voltage prediction block
- 72: future development of grid voltage
- 74: time window
- 76: grid power prediction block
- 78: drive torque prediction block
- 80: future development of drive torque
- 82: process behaviour prediction block
- 84: future development of a process quantity
- 86: process parameter
- 88: decision block
- 90: cooler
- 92: cold recycle path
- 94: cold recycle valve
- 96: station recycle path
- 98: station recycle valve
- 100: electrical data
- 101: process data
- 102: mechanical data
- 104: data collection block
- 106: triggering block
- 108: process parameter prediction block
- 110: command
- 112: controller
- 114: alarms/alerts
- 116-122: reference signals

## Claims

1. A method of controlling a compressor system (10) with a gas compressor (32) and an electrical variable-speed drive (30) supplied by an electrical grid (36) and driving the gas compressor (32), the method comprising:
detecting a voltage dip (12) in a grid voltage (V) supplied to the electrical drive (30) by comparing the grid voltage (V) with a voltage dip threshold;
in the case, a voltage dip (12) is detected:
assuming a future development (72) of the grid voltage (V);
predicting a future development (84) of at least one process quantity (q) based on at least one process parameter (86) measured in the compressor system (10) and the assumption of the future development (72) of the grid voltage (V);
providing the predicted future development (84) of the least one process quantity (q) to a protection system (88),
wherein the assumed future development (72) of the grid voltage (V) is based on a predefined depth and a predefined length of an average voltage dip;
**characterized in that** the predefined depth and the predefined length of the average voltage dip are determined online from a set of historical voltage dip cases.

2. The method of claim 1, further comprising:
deciding on shutting down the compressor system (10), when the future development (84) of the process quantity (q) reaches a shut-down threshold (20).

3. The method of one of the preceding claims,
wherein the at least one process quantity comprises a mechanical process quantity; and/or
wherein the at least one process quantity comprises a rotation speed of a shaft of the gas compressor.

4. The method of one of the preceding claims,
wherein the at least one process quantity comprises a thermodynamic process quantity; and/or
wherein the at least one process quantity comprises at least one of: a compressor flow, a suction pressure, a discharge pressure, a pressure ratio, a distance to surge, a time to surge.

5. The method of one of the preceding claims, further comprising:
predicting a future development (80) of a torque of the electrical drive (30) supplied to the gas compressor (32) based on the future development (72) of the grid voltage (V).

6. The method of claim 5,
wherein the future development (84) of the at least one process quantity (q) is based on the future development (80) of the torque of the electrical drive (30).

7. The method of claim 5 or claim 6,
wherein the prediction of the future development (80) of the torque is based on an offline calculated lookup table interrelating the future development (72) of the grid voltage (V) with the future development (80) of torque.

8. The method of one of the preceding claims,
wherein the prediction of the future development (84) of the at least one process quantity (q) is based on an offline lookup table interrelating the at least one process parameter (86) measured in the compressor system (10) with the future development (84) of the at least one process quantity (q).

9. The method of one of the preceding claims,
wherein the future development (84) of the process quantity (q) is based on a dynamical model of the compressor system (10), the dynamical model modelling the physical behavior of the compressor system (10).

10. The method of one of the preceding claims,
wherein a future development (80) of a torque of the electrical drive (30) is based on a dynamical model of the compressor system (10), the dynamical model modelling the physical behavior of the compressor system (10).

11. The method of claim 9 or 10, wherein the dynamical model is based on at least one of:
a model of the gas compressor (32),
a model of the electrical grid (36),
a model of the electrical drive (30),
a model of a mechanical shaft (42) interconnecting the electrical drive and the gas compressor.

12. The method of one of the preceding claims,
wherein the future development (72) of the grid voltage (V) and the future development (84) of the at least one process quantity (q) is predicted for a predefined time window (74).

13. A compressor system (10), comprising:
a gas compressor (32);
an electrical drive (30) driving the gas compressor (32);
a controller (56) for deciding to shut-down the compressor system (10) in the case of a voltage dip (12), wherein the controller (56) is adapted to perform the method of one of claims 1 to 12.

## Patentansprüche

1. Verfahren zur Steuerung eines Kompressorsystems (10) mit einem Gaskompressor (32) und einem drehzahlvariablen Elektroantrieb (30), der von einem Stromnetz (36) gespeist wird und den Gaskompressor (32) antreibt, wobei das Verfahren Folgendes umfasst:
Detektieren eines Spannungseinbruchs (12) in einer Netzspannung (V), die dem Elektroantrieb (30) zugeführt wird, durch Vergleichen der Netzspannung (V) mit einer Spannungseinbruchschwelle;
im Fall, dass ein Spannungseinbruch (12) detektiert wird:
Annehmen einer Zukunftsentwicklung (72) der Netzspannung (V);
Vorhersagen einer Zukunftsentwicklung (84) von mindestens einer Prozessgröße (q) basierend auf mindestens einem Prozessparameter (86), der in dem Kompressorsystem (10) gemessen wird, und der Annahme der Zukunftsentwicklung (72) der Netzspannung (V);
Bereitstellen der vorhergesagten Zukunftsentwicklung (84) der mindestens einen Prozessgröße (q) für ein Schutzsystem (88),
wobei die angenommene Zukunftsentwicklung (72) der Netzspannung (V) auf einer vordefinierten Tiefe und einer vordefinierten Länge eines durchschnittlichen Spannungseinbruchs basiert;
**dadurch gekennzeichnet, dass**
die vordefinierte Tiefe und die vordefinierte Länge des durchschnittlichen Spannungseinbruchs online anhand einer Menge von historischen Spannungseinbruchsfällen bestimmt werden.

2. Verfahren nach Anspruch 1, das ferner Folgendes umfasst:
Entscheiden über Abschalten des Kompressorsystems (10), wenn die Zukunftsentwicklung (84) der Prozessgröße (q) eine Abschaltschwelle (20) erreicht.

3. Verfahren nach einem der vorhergehenden Ansprüche, wobei die mindestens eine Prozessgröße eine mechanische Prozessgröße umfasst; und/oder
wobei die mindestens eine Prozessgröße eine Drehzahl einer Welle des Gaskompressors umfasst.

4. Verfahren nach einem der vorhergehenden Ansprüche, wobei die mindestens eine Prozessgröße eine thermodynamische Prozessgröße umfasst; und/oder wobei die mindestens eine Prozessgröße einen Kompressordurchfluss und/oder einen Ansaugdruck und/oder einen Ablassdruck und/oder ein Druckverhältnis und/oder eine Distanz zum Stoß und/oder eine Zeit zum Stoß umfasst.

5. Verfahren nach einem der vorhergehenden Ansprüche, das ferner Folgendes umfasst:
Vorhersagen einer Zukunftsentwicklung (80) eines Drehmoments des Elektroantriebs (30), das dem Gaskompressor (32) zugeführt wird, basierend auf der Zukunftsentwicklung (72) der Netzspannung (V).

6. Verfahren nach Anspruch 5,
wobei die Zukunftsentwicklung (84) der mindestens einen Prozessgröße (q) auf der Zukunftsentwicklung (80) des Drehmoments des Elektroantriebs (30) basiert.

7. Verfahren nach Anspruch 5 oder 6,
wobei die Vorhersage der Zukunftsentwicklung (80) des Drehmoments auf einer offline berechneten Nachschlagetabelle basiert, die die Zukunftsentwicklung (72) der Netzspannung (V) mit der Zukunftsentwicklung (80) des Drehmoments verknüpft.

8. Verfahren nach einem der vorhergehenden Ansprüche, wobei die Vorhersage der Zukunftsentwicklung (84) der mindestens einen Prozessgröße (q) auf einer offline berechneten Nachschlagetabelle basiert, die den mindestens einen Prozessparameter (86), der in dem Kompressorsystem (10) gemessen wird, mit der Zukunftsentwicklung (84) der mindestens einen Prozessgröße (q) verknüpft.

9. Verfahren nach einem der vorhergehenden Ansprüche, wobei die Zukunftsentwicklung (84) der Prozessgröße (q) auf einem dynamischen Modell des Kompressorsystems (10) basiert, wobei das dynamische Modell das physikalische Verhalten des Kompressorsystems (10) modelliert.

10. Verfahren nach einem der vorhergehenden Ansprüche, wobei eine Zukunftsentwicklung (80) eines Drehmoments des Elektroantriebs (30) auf einem dynamischen Modell des Kompressorsystems (10) basiert, wobei das dynamische Modell das physikalische Verhalten des Kompressorsystems (10) modelliert.

11. Verfahren nach Anspruch 9 oder 10, wobei das dynamische Modell auf mindestens einem der Folgenden basiert:
einem Modell des Gaskompressors (32),
einem Modell des Stromnetzes (36),
einem Modell des Elektroantriebs (30),
einem Modell einer mechanischen Welle (42), die den Elektroantrieb und den Gaskompressor verbindet.

12. Verfahren nach einem der vorhergehenden Ansprüche, wobei die Zukunftsentwicklung (72) der Netzspannung (V) und die Zukunftsentwicklung (84) der mindestens einen Prozessgröße (q) für ein vordefiniertes Zeitfenster (74) vorhergesagt wird.

13. Kompressorsystem (10), das Folgendes umfasst:
einen Gaskompressor (32);
einen Elektroantrieb (30), der den Gaskompressor (32) antreibt;
eine Steuerung (56) zum Entscheiden, das Kompressorsystem (10) im Falle eines Spannungseinbruchs (12) abzuschalten, wobei die Steuerung (56) eingerichtet ist zum Durchführen des Verfahrens nach einem der Ansprüche 1 bis 12.

## Revendications

1. Procédé de commande d'un système de compresseur (10) avec un compresseur de gaz (32) et un entraînement électrique à vitesse variable (30) alimenté par un réseau électrique (36) et entraînant le compresseur de gaz (32), le procédé comprenant :
la détection d'une baisse de tension (12) dans une tension de réseau (V) fournie à l'entraînement électrique (30) en comparant la tension de réseau (V) avec un seuil de baisse de tension ;
dans ce cas, une baisse de tension (12) est détectée :
en supposant une évolution future (72) de la tension du réseau (V) ;
la prévision d'une évolution future (84) d'au moins une grandeur de processus (q) sur la base d'au moins un paramètre de processus (86) mesuré dans le système de compresseur (10) et l'hypothèse d'une évolution future (72) de la tension de réseau (V) ;
la fourniture de l'évolution future prévue (84) de l'au moins une grandeur de processus (q) à un système de protection (88),
l'évolution future supposée (72) de la tension de réseau (V) étant basée sur une profondeur prédéfinie et une longueur prédéfinie d'une baisse de tension moyenne ;
**caractérisé en ce que**
la profondeur prédéfinie et la longueur prédéfinie de la baisse de tension moyenne sont déterminées en ligne à partir d'un ensemble de cas historiques de baisse de tension.

2. Procédé selon la revendication 1, comprenant en outre :
la décision de l'arrêt du système de compresseur (10), lorsque l'évolution future (84) de la grandeur de processus (q) atteint un seuil d'arrêt (20).

3. Procédé selon l'une des revendications précédentes,
l'au moins une grandeur de processus comprenant une grandeur de processus mécanique ; et/ou
l'au moins une grandeur de processus comprenant une vitesse de rotation d'un arbre du compresseur de gaz.

4. Procédé selon l'une des revendications précédentes,
l'au moins une grandeur de processus comprenant une grandeur de processus thermodynamique ; et/ou
l'au moins une grandeur de processus comprenant au moins l'un des éléments suivants : un débit de compresseur, une pression d'aspiration, une pression de refoulement, un rapport de pression, une distance par rapport au pompage, un temps par rapport au pompage.

5. Procédé selon l'une des revendications précédentes, comprenant en outre :
la prévision d'une évolution future (80) d'un couple de l'entraînement électrique (30) fourni au compresseur de gaz (32) sur la base de l'évolution future (72) de la tension de réseau (V).

6. Procédé selon la revendication 5,
l'évolution future (84) de l'au moins une grandeur de processus (q) étant basée sur l'évolution future (80) du couple de l'entraînement électrique (30).

7. Procédé selon la revendication 5 ou selon la revendication 6,
la prévision de l'évolution future (80) du couple étant basée sur un tableau de consultation calculé hors ligne qui met en relation l'évolution future (72) de la tension de réseau (V) avec l'évolution future (80) du couple.

8. Procédé selon l'une des revendications précédentes,
la prévision de l'évolution future (84) de l'au moins une grandeur de processus (q) étant basée sur une table de consultation hors ligne mettant en relation l'au moins un paramètre de processus (86) mesuré dans le système de compresseur (10) avec l'évolution future (84) de l'au moins une grandeur de processus (q).

9. Procédé selon l'une des revendications précédentes,
l'évolution future (84) de la grandeur de processus (q) étant basée sur un modèle dynamique du système de compresseur (10), le modèle dynamique modélisant le comportement physique du système de compresseur (10).

10. Procédé selon l'une des revendications précédentes, une évolution future (80) d'un couple de l'entraînement électrique (30) étant basée sur un modèle dynamique du système de compresseur (10), le modèle dynamique modélisant le comportement physique du système de compresseur (10).

11. Procédé selon la revendication 9 ou 10, le modèle dynamique étant basé sur au moins un des éléments suivants
un modèle du compresseur de gaz (32),
un modèle du réseau électrique (36),
un modèle de l'entraînement électrique (30),
un modèle d'un arbre mécanique (42) reliant l'entraînement électrique et le compresseur de gaz.

12. Procédé selon l'une des revendications précédentes,
l'évolution future (72) de la tension de réseau (V) et l'évolution future (84) de l'au moins une grandeur de processus (q) étant prévues pour une fenêtre de temps prédéfinie (74).

13. Système de compresseur (10), comprenant :
un compresseur de gaz (32) ;
un entraînement électrique (30) entraînant le compresseur de gaz (32) ;
un dispositif de commande (56) pour décider d'arrêter le système de compresseur (10) dans le cas d'une baisse de tension (12), le dispositif de commande (56) étant adapté pour réaliser le procédé selon l'une des revendications 1 à 12.
